# EUROPÄISCHE PATENTSCHRIFT

(11) **EP 0 827 443 B1**
(45) Veröffentlichungstag und Bekanntmachung des Hinweises auf die Patenterteilung: **10.02.1999**
(21) Anmeldenummer: 96916053.0
(22) Anmeldetag: 13.05.1996
(51) Int. Cl.: B26D 9/00, C08F 2/48

(54) **VORRICHTUNG UND VERFAHREN ZUR GROBZERKLEINERUNG VON WASSERHALTIGEN POLYMERISATGELEN**
PROCESS AND DEVICE FOR THE COARSE FRAGMENTATION OF AQUEOUS POLYMER GELS
PROCEDE ET DISPOSITIF DE FRAGMENTATION GROSSIERE DE GELS AQUEUX POLYMERES

(30) Priorität: 20.05.1995 DE 19518645
(43) Veröffentlichungstag der Anmeldung: 11.03.1998
(73) Patentinhaber: STOCKHAUSEN GmbH & CO. KG, 47805 Krefeld (DE)
(72) Erfinder: ALBIN, Detlef, D-47441 Moers (DE); SCHULTE, Jürgen, D-47807 Krefeld (DE); GÜNTHER, Uwe, D-75392 Deckenpfronn (DE)
(74) Vertreter: Klöpsch, Gerald, Dr.-Ing. Patentanwalt
(86) Internationale Anmeldenummer: EP9602040
(87) Internationale Veröffentlichungsnummer: WO9636464

(56) Entgegenhaltungen:
- FR-A- 1 257 359
- FR-A- 2 575 476
- US-A- 4 340 342

## Beschreibung

Die Erfindung betrifft eine Vorrichtung zur Grobzerkleinerung eines wasserhaltigen Polymerisatgeles mit zwei achsparallel zueinander angeordneten, in unterschiedlichen Richtungen rotierenden Walzen, zwischen denen ein Walzenspalt zum Durchtritt des Polymerisatgeles ausgebildet ist und ein Verfahren zu seiner Durchführung.

Wasserhaltige Polymerisatgele werden aus wasserlöslichen Monomeren durch Lösungspolymerisation bei der Herstellung von wasserlöslichen oder wasserquellbaren Polymerisaten erhalten. Industrielle Herstellungsverfahren für wasserlösliche Polymerisate sind bekannt. Sie werden als Flockungshilfsmittel, Entwässerungs- und Retentionsmittel, als viskositätserhöhende Mittel in wässrigen Medien, beispielsweise bei der tertiären Erdölgewinnung oder als Mahl- und Dispergierhilfsmittel verwendet. Ebenso sind Herstellungsverfahren zur Erzeugung wasserquellbarer Polymerisate bekannt, die als Superabsorber im Hygiene- und Sanitärbereich oder als Bodenverbesserer in der Landwirtschaft oder als Abdichtungsmittel bei der Herstellung von strom- und lichtleitenden Kabeln verwendet werden.

Die Herstellung der Pulverprodukte erfolgt in der Regel in einem kontinuierlichen Prozeß, beispielsweise durch radikalische Polymerisation von wasserlöslichen Polymeren auf einem Endlosband, wie es in DE 35 44 770 C2 beschrieben ist, wobei nach der Polymerisation wasserhaltige, im Zustand weiche, zähelastische oder spröde Polymerisatgele anfallen.

Die Verarbeitung der Polymerisatgele zu Pulvern erfolgt in den anschließenden Verfahrenschritten Grobzerkleinerung, Feinzerkleinerung, Trocknung und Mahlung und erfordert einen erheblichen Aufwand, sofern die im Gelzustand erreichten Polymerisateigenschaften erhalten bleiben sollen. Die hierzu auch erforderliche Gleichmaßigkeit des Verfahrensablaufs wird bereits durch die Vorzerkleinerung und Zerkleinerung der weichen, zähelastischen oder spröden Gele behindert. So werden die zähelastischen Gelblöcke oder Gelstränge beispielsweise in Knetern in ungleichmaßig große Stücke zerrissen, während bei der Zerteilung weicher Gele mit zunehmender Plastizität Gelteile mit immer größeren Dimensionen erzeugt werden und wobei die Knetwerkzeuge oft durch aufgewickelte Gelteile blockiert werden.

Hieraus resultiert ein ungleichmäßiger Materialfluß, der zu unterschiedlichen Schichtdicken bei der Siebbandtrocknung und damit zu einer nicht ausreichenden oder zu starken Trocknung des Polymerisats unter Beeinträchtigung des nachfolgenden Mahl- und Klassifizierungsvorganges führt und wodurch andererseits, beispielsweise durch die Verhornung des Polymerisats eine Verminderung der Löslichkeit oder Quellbarkeit und damit ein Performance-Verlust des Produktes entsteht.

Bei der Verarbeitung spröder, vernetzter Gele, mit einem Vernetzergehalt über 0,15 % bezogen auf die Gesamtmenge der Monomeren, werden bei üblicher Verarbeitung außerdem oft große Mengen zu Kleiner Gelpartikel gebildet, die nach dem Trocknen und Mahlen die Ausbeute des Trockenproduktes im geforderteten Korngrößebereich, von beispielsweise 1000 - 3000 µm vermindern.

Zur Vermeidung der geschilderten Nachteile wird bei der Herstellung von teilchenförmigen Polymeren mit hohem Molekulargewicht und guter Löslichkeit nach DE 35 06 543 C2 die Polymerfolie mit einer Schichtdicke von maximal 10 mm zunächst in einer Schneidvorrichtung vom Walzentyp zu Streifen mit einer Breite von 3 mm bis 10 mm mittels eines Walzenpaares zerteilt, die eine Vielzahl von ringförmigen Vorsprüngen oder Rillen in vorgegebenen Abständen auf ihrer Oberfläche aufweisen und in unterschiedlichen Richtungen zueinander rotieren. Anschließend werden diese Streifen mit einer Kombination, bestehend aus einer feststehenden Klinge und einer Rotationsschneideeinrichtung zu kubischen Stücken mit einer Seitenlänge von 3 mm bis 10 mm zerschnitten. Dabei weist die Rotationsschneideeinrichtung einen drehbaren, zylindrischen Körper auf, der auf seinem Umfang mit mindestens einer Klinge ausgestattet ist.

Nach dem in DE 35 06 534 C2 angegebenen Verfahren ist es erforderlich, die Polymerkonzentration bei Acrylamidpolymeren im Bereich von 20 - 60 Gew.% und bei kationischen Polymerisaten, die insbesondere Homopolymerisate mit sehr weicher Konsistenz bilden, die Monomerkonzentration auf 50 - 85 Gew.% einzustellen. Um im Zustand verarbeitungsfähige Gele zu erhalten, ist es nach diesem Verfahren weiterhin erforderlich, nichtionogene oder anionische, oberflächenaktive Mittel auf die Polymerfolie zu geben, kalte Luft einzublasen, um die Gelmasse durch Abkühlung zu verspröden sowie gegebenenfalls eine Vortrocknung der Polymerfolie bei 50 - 120 °C mittels Heißluft vorzunehmen. Weiterhin erfordert das beschriebene Verfahren wegen der Anordnung der Schneidmesser eine nach der Polymerisation exakt ausgebildete Stärke der Polymerisatschicht. Die genannten Verfahrensbedingungen stellen sowohl apperativ als auch verfahrens- und damit kostenmäßig aufwendige Arbeitsweisen dar.

Daher liegt der Erfindung die Aufgabe zugrunde, eine verbesserte Vorrichtung zur Grobzerkleinerung von wasserhaltigen Polymerisatgelen zu finden, die die gleichmäßige und kostengünstige Zerteilung von weichen, zähelastischen oder spröden Polymerisatgelen gestattet, sowie ein Verfahren zu entwickeln, das zur gleichmäßigen und kostengünstigen Verarbeitung von in der Konsistenz unterschiedlichen wässrigen Polymerisatgelen geeignet ist.

Als Lösung dieser Aufgabe wird erfindungsgemäß vorgeschlagen, die Vorrichtung der eingangs genannten Art dahingehend weiterzubilden, daß eine Walze als Schneidwalze ausgebildet ist, an der mindestens ein sich in axialer Richtung erstreckendes, eine Schneidkante aufweisendes Querschneidelement und ein sich in radialer Richtung erstreckendes, eine umlaufende Schneidkante aufweisendes Längsschneidelement angebracht ist und daß die andere Walze als Gegenwalze ausgebildet ist.

Eine nach dieser technischen Lehre ausgebildete Vorrichtung zur Grobzerkleinerung eines wasserhaltigen Polymerisatgeles hat den Vorteil, daß durch die Anordnung des Quer- und des Längsschneidelements auf einer Walze eine kostengünstige Vorrichtung entsteht, die obendrein das Gel in einem einzigen Arbeitsschritt zerkleinert, so daß die Zerkleinerung schnell und kostengünstig erfolgen kann.

Als weitere Lösung der oben genannten Aufgabe wird erfindungsgemäß vorge-schlagen, die Vorrichtung der eingangs genannten Art dahingehend weiterzubilden, daß eine Walze als Querschneidwalze ausgebildet ist, an der mindestens ein sich in axialer Richtung erstreckendes, eine Schneidkante aufweisendes Querschneideelement angebracht ist, daß die andere Walze als Gegenwalze ausgebildet ist und daß der Querschneidwalze eine Längsschneidwalze mit mindestens einem sich in radialer Richtung erstreckendem, eine umlaufende Schneidkante aufweisenden Längsschneidelement vorgelagert ist.

Eine nach dieser technischen Lehre ausgebildete Vorrichtung zur Grobzerkleinerung eines wasserhaltigen Polymerisatgeles hat den Vorteil, daß der apparative Aufwand gegenüber dem Stand der Technik vergleichsweise gering ist, daß der Schneidvorgang mit einer einzigen Vorrichtung durchgeführt werden kann, daß der Schneidvorgang sehr schnell und kostengünstig durchführbar ist und daß durch die Trennung des Längs- und Querschnittes in zwei nachgeordneten Schritten einen sehr sauberen Schnitt ermöglicht.

In einer bevorzugten Ausführungsform entspricht die Breite des Walzenspaltes in etwa der Höhe der Quer- und/oder Längsschneidelemente. Dies hat den Vorteil, daß die Schneidelemente an zumindest einem Punkt ihre Umlaufbahn an der Gegenwalze anliegen, so daß eine saubere Abtrennung des Polymerisatgeles gewährleistet ist.

Um eine exakte Justierung des Walzenspaltes in Abhängigkeit des zu schneidenden Polymerisatgeles und des Zustandes der Schneidelemente zu ermöglichen, ist dieser variierbar. Dies kann beispielsweise dadurch erfolgen, daß die gesamte Gegenwalze relativ zur Schneid- bzw. Querschneidwalze und parallel zu dieser verschoben wird.
In einer besonders bevorzugten Ausführungsform ist die Umfangsgeschwindigkeit des Längsschneideelementes größer als die Fördergeschwindigkeit des Polymerisatgels. Hierdurch werden Staueffekte vermieden.

In einer weiteren, bevorzugten Ausführungsform sind die Schneidelemente aus einem einseitig mit einem Feinschliff versehenen Flacheisen gebildet und im Querschnitt vorzugsweise eben oder sichelförmig ausgebildet. Hierdurch wird erreicht, daß die Schneidkante in einem Winkel von kleiner als 90 Grad auf die Gelschichtoberfläche auftritt und einen sauberen und gleichmäßigen Schnitt erzielt.

Hierzu ist es auch vorteilhaft, die Querschneidelemente gleichmäßig auf den Umfang der Schneidwalze zu verteilen und parallel oder spindelförmig zur Längsachse der Schneidwalze anzuordnen.

In einer besonders bevorzugten Ausführungsform der erfingungsgemäßen Vorrichtung transportiert die Gegenwalze das Polymerisatgel und preßt dieses während des Schneidvorganges gegen die Quer- und/oder Längsschneidelemente. Dies hat den Vorteil, daß das Polymerisatgel zuverlässig transportiert und an der dafür vorgesehenen Stelle sauber abgetrennt wird.

An der Schneidwalze können ein oder mehrere Längsschneidelemente und ein oder mehrere Querschneidelemente angebracht werden, so daß das Polymerisatgel in annähernd beliebig große Stücke geschnitten werden kann.

In einer weiteren, besonders bevorzugten Ausführungsform ist die Oberfläche der Gegenwalze mit einem Kunststoff beschichtet. Dieser Kunststoff soll einerseits die Gegenwalze vor Verschleiß und Beschädigungen schützen und gleichzeitig eine gute Haftung der Gegenwalze am Polymerisatgele realisieren, ohne dies negativ zu beeinflussen. Hierzu wird vorzugsweise Polyethylen, Polypropylen oder Teflon verwendet.

In einer weiteren, besonders bevorzugten Ausführungsform weist die Oberfläche der Gegenwalze Vertiefungen auf. Dabei sind diese Vertiefungen so angeordnet, daß sie die Schneidkanten der auf der Schneidwalze angebrachten Quer- und/oder Längsschneidelemente aufnehmen kann. Hierdurch wird gewährleistet, daß die Schneidelemente das Polymerisatgel vollkommen durchdringen und sauber abtrennen.

Als weitere Lösung der oben genannten Aufgabe wird erfindungsgemäß ein Verfahren zur Grobzerkleinerung wasserhaltiger Polymerisatgelees vorgeschlagen, das das wasserhaltige Polymerisatgel direkt nach der Polymerisation ohne Hilfsmittel oder zusätzliche verfahrenstechnische Behandlungsmaßnahmen mit einer Vorrichtung gemaß wenigstens einem der Ansprüche 1 bis 11 zu Polymerisatgelteilen vorgegebener Größe grob zerteilt.

Dieses Verfahren wird vorzugsweise kontinuierlich ausgeführt.

Es wurde gefunden, daß wasserhaltige Polymerisatgele unterschiedlicher Zusammensetzung und Konsistenz, gegebenenfalls direkt nach der Polymerisation, ohne weitere Hilfsmittel oder zusätzliche verfahrenstechnische Behandlungsmaßnahmen mit einer erfindungsgemäßen Vorrichtung, zu Gelteilen vorgegebener Größe grob zerteilt und mit kontinuierlichem Materialfluß der Feinzerkleinerung und den nachfolgenden Bearbeitungsstufen Trocknung, Mahlung und Klassifizierung zugeführt werden können.

Dies hat den Vorteil, daß das Verfahren zur Grobzerkleinerung wasserhaltiger Polymerisatgele und ganz allgemein das Bearbeitungsverfahren derartiger Polymerisatgele deutlich vereinfacht und verbilligt wird, insbesondere da weitere Hilfsmittel oder Behandlungsmaßnahmen obsolet werden.
Während bei den bekannten Verfahren erst eine ausreichende Gelfestigkeit die Zerkleinerung gewährleistet, lassen sich durch Verwendung der erfindungsgemäßen Vorrichtung auch weiche und plastische Polymerisatgele, beispielsweise von Copolymerisaten mit hohem kationischem Anteil, kationischen Homopolymerisaten oder von niedrigmolekularen Polymerisaten verarbeiten, sofern die wässrigen Polymerisatgele scherfähig sind. Die Plastizität der Polymerisatgele ist dagegen ebenfalls von untergeordneter Bedeutung.

Durch die erfindungsgemäße Verfahrensweise wird ein gleichmäßiger störungsfreier Materialfluß bei den nachfolgenden Verfahrensstufen, insbesondere bei der Trocknung, beim Mahlen und bei der Siebklassifizierung der Pulver erreicht. Insbesondere werden die Nachteile durch eine zu starke Trocknung vermieden und Pulverprodukte mit gleichbleibend hoher Qualität erzeugt.

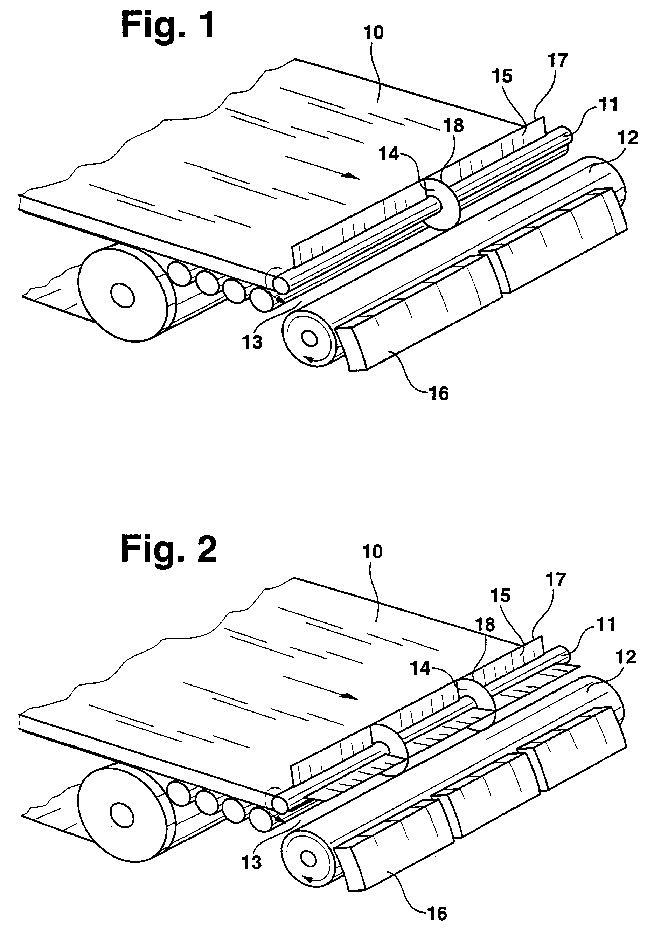

Weitere Vorteile der erfindungsgemäßen Vorrichtung und des erfindungsgemäßen Verfahrens ergeben sich aus der Beschreibung der Ausführungsformen und der beigefügten Zeichnung. Ebenso können die vorstehend genannten und die noch weiter aufgeführten Merkmale erfindungsgemäß jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter. Ausführungsformen der Erfindung sind in den Figuren 1 bis 4 der Zeichnung dargestellt und werden im Folgenden näher erläutert.
- Fig. 1: zeigt eine perspektivische Darstellung einer ersten Ausführungsform einer erfindungsgemäßen Vorrichtung zur Grobzerkleinerung von wasserhaltigen Polymerisatgelen;
- Fig. 2: zeigt eine perspektivische Darstellung einer zweiten Ausführungsform der erfindungsgemäßen Vorrichtung mit zwei Längsschneidelementen und drei gleichmäßig über dem Umfang verteilten Querschneidelementen;
- Fig. 3: zeigt eine dritte Ausführungsform der erfindungsgemäßen Vorrichtung mit fünf Längsschneidelementen und einem Querschneidelement, welches über die Länge der Schneidwalze jeweils um 60 Grad versetzt angeordnet ist;
- Fig. 4: zeigt eine perspektivische Darstellung einer vierten Ausführungsform der erfindungsgemäßen Vorrichtung, bei der die Quer- und die Längsschneidelemente auf zwei getrennten Walzen angeordnet sind.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind teilweise stark überproportional vergrößert dargestellt, damit ihr Aufbau besser gezeigt werden kann.

Die in **Fig. 1** dargestellte erste Ausführungsform wird vorzugsweise zur Grobzerkleinerung von weichen und/oder plastischen wasserhaltigen Polymerisatgelen **10** eingesetzt. Dieses Polymerisatgel **10** wird der Vorrichtung als ein maximal 10 mm dicker Gelstrang **10** zugeführt. Dieser Gelstrang **10** wird in einem zwischen einer Schneidwalze **11** und einer Gegenwalze **12** ausgebildeten Walzenspalt **13** geführt. Das auf der Schneidwalze **11** angebrachte Längsschneidelement **14** trennt den Gelstrang **10** in zwei Teilstränge und das ebenfalls auf der Schneidwalze **11** angebrachte Querschneidelement **15** trennt von jedem Teilstrang quaderförmige Gelstücke **16** ab. Der Walzenspalt **13** ist so dimensioniert, daß das Längs- **14** und das Querschneidelement **15** mit seiner Schneidkante **17** gerade eben an der Gegenwalze **12** vorbeigeführt werden kann, ohne diese zu berühren. Entsprechendes gilt auch für eine um das Längsschneidelement **14** umlaufende Schneidkante **18**.
In dieser ersten Ausführungsform weist die Schneidwalze **11** ein einzelnes Längsschneidelement **14** und ein einzelnes Querschneidelement **15** auf.

Der Walzenspalt **13** ist verstellbar, um verschiedenen Anwendungserfordemissen gerecht zu werden.

**Fig. 2** zeigt eine zweite Ausführungsform mit zwei Längsschneidelementen **14** und drei gleichmäßig über den Umfang der Schneidwalze **11** verteilten Querschneidelemente **15**. Im übrigen entspricht diese Ausführungsform der oben beschriebenen ersten Ausführungsform.

Diese zweite Ausführungsform wird vorzugsweise zur Grobzerkleinerung zähelastischer oder spröder Polymerisatgele eingesetzt.

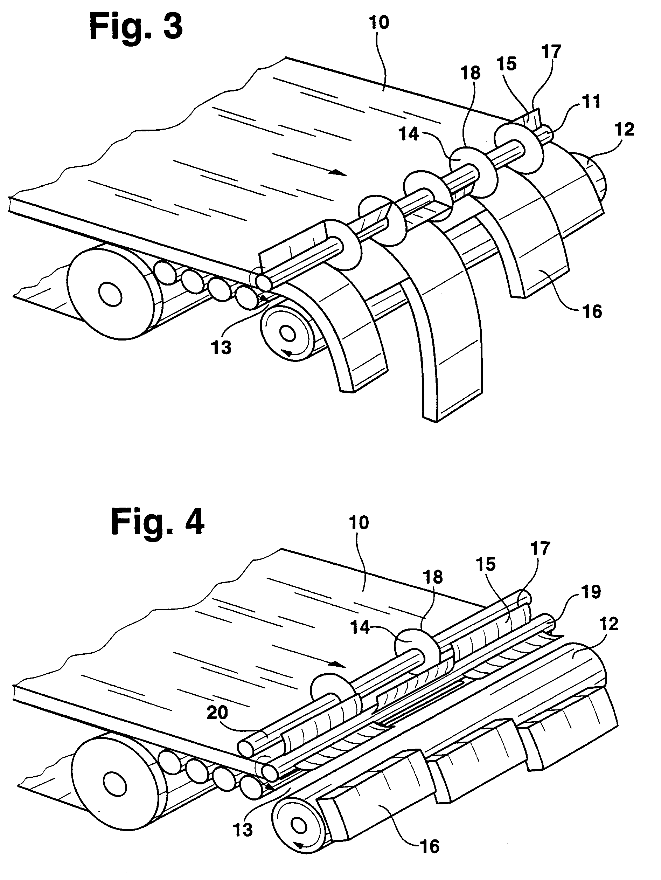

Die in **Fig. 3** dargestellte dritte Ausführungsform weist fünf Längsschneidelemente **14** und ein einzelnes Querschneidelement **15** auf. Allerdings ist dieses Querschneidelement **15** über die axiale Länge der Schneidwalze **11** jeweils um 60 Grad versetzt auf dessen Umfang angeordnet.

Die in **Fig. 4** dargestellte vierte Ausfürungsform weist eine Querschneidwalze **19** mit drei über den Umfang verteilten Querschneidelementen **15** und eine der Querschneidwalze **19** vorgeschaltete Längsschneidwalze **20** auf, die zwei Längsschneidelemente **14** trägt.

In dieser Ausführungsform sind die Querschneidelemente **15** im Querschnitt sichelförmig ausgebildet, so daß die Schneidkante **18** in einem Winkel von Kleiner als 90 Grad auf die Oberfläche des Polymerisatgeles **10** auftrifft.

Als Längsschneidelemente **14** werden in Form und Ausführung im Prinzip bekannte, vorzugsweise scheibenförmige, kreisrunde, beispielsweise aus Edelstahl gefertigte Messer verwendet, die beliebig oder mit definiertem Abstand auf der Schneidwalze **11, 20** angeordnet sind. Die Größe der Längsschneidelemente **14** wird so gewählt, daß beim Schneidvorgang durch jedes Element die gesamte Schicht des Polymerisatgels durchgetrennt wird. Mit der erfindungsgemäßen Vorrichtung lassen im Bereich Polymerisatgele, vorzugsweise als bandförmige Gelstränge, mit einer Schichtdicke von 3 bis 500 mm, bevorzugt von 3 bis 150 mm und vorzugsweise von 10 bis 130 mm zerkleinern.

Als Querschneidelemente **15** werden einseitig mit einem Feinschliff versehene Flacheisen verwendet, deren Fläche eben oder vorzugsweise so ausgebildet ist, daß sie ein sichelförmiges Profil aufweisen, so daß die Schneidkante in einem Winkel von Kleiner 90 Grad auf die Gelschichtoberfläche trifft.

Die Querschneidelemente **15** können mit beliebigem radialen Abstand, mit verschiedenen oder vorzugsweise gleichem Winkelabstand, parallel oder spindelförmig zur Drehachse auf der Drehwelle angeordnet sein.

Die Größe der Querschneidelemente **15** wird so gewählt, daß Polymerisatgele mit der angegebenen Schichtdicke und einer Breite von 100 bis 2000 mm, vorzugsweise 100 bis 800 mm in einem Arbeitsgang, das heißt bei einmaligem Durchlauf des Polymerisatgels durch die Vorrichtung zerteilt werden.

Die Anzahl sowie die Anordnung der Längs- **14** und Querschneidelemente **15** ist variabel und abhängig von den Eigenschaften des zu bearbeitenden Polmerisatgels und von der gewünschten Größe der Gelabschnitte, deren Länge im Bereich von 100 bis 200 mm und deren Breite im Bereich von 10 bis 200 mm liegt.

Die **Fig. 1** bis **4** zeigen gleichzeitig die Wirkungsweise der erfindungsgemäßen Vorrichtung. Beim Schneidvorgang werden die Gelteile in der Form abhängig von der Anzahl der Längs**14** und Querschneidelemente **15** sowie von der Fördergeschwindigkeit des Gelstranges durch die Vorrichtung erhalten. Die abgebildeten Formen entstehen bei gleicher Fördergeschwin digkeit und Umfangsgeschwindigkeit der Längsschneidelemente **14**. Zur Vermeidung von Staueffekten wird jedoch üblicherweise eine Umfangsgeschwindigkeit des Längsschneidelements **14** oberhalb der Fördergeschwindigkeit des Polymerisatgelstrangs gewählt, die im Bereich von 0,05 m/Min. bis 1,5 m/Min. und vorzugsweise im Bereich von 0,1 bis 0,5 m/Min. liegt.

In einer weiteren, nicht dargestellten Ausführungsform der erfindungsgemäßen Vorrichtung kann die Anordnung der Schneidelemente auf mehreren, vorzugsweise zwei oder drei drehbar gelagerten Walzen angeordnet sein. Beispielsweise (siehe Fig. 4) kann die Vorrichtung aus zwei Walzen bestehen, wobei auf der ersten Walze **20** vorzugsweise mindestens ein Längsschneidelement **14** und auf der zweiten Walze **19** mindestens ein Querschneidelement **15** angeordnet ist.

Durch die erfindungsgemäße Vorrichtung wird ohne die Verwendung von Hilfsmitteln, das Anhaften der Gelteile an und zwischen den Schneidelementen verhindert.

Parallel zu den Längs- **14** und Querschneidelementen **15** ist mindestens eine Gegenwalze **12**, entsprechend der Stärke der zu verarbeitenden Gelschicht mit verschiebbarem Walzenspalt **13** angeordnet, die das Gel transportiert und während des Schneidvorgangs gegen die Schneidkanten **17, 18** der Schneidelemente **14, 15** preßt.

Die Oberfläche der Gegenwalze **12** ist vorzugsweise mit einem Kunststoff, wie Polyethylen, Polypropylen und/oder Teflon beschichtet und vorzugsweise strukturiert. Durch Einkerbungen, in die die Schneidkanten **17, 18** der Schneidelemente **14, 15** geführt werden können, wird zusätzlich ein vollständiger Schnitt durch die gesamte Gelschicht gewährleistet. Unter Verwendung der erfindungsgemäßen Vorrichtung werden in einem erfindungsgemäßen Verfahren wasserhaltige Polymerisatgele von wasserlöslichen oder wasserquellbaren Homo und Copolymerisaten oder Pfropfpolymerisaten, vorzugsweise direkt nach der Polymerisation, zu Gelteilen mit vorgegebener Größe vollständig zerteilt, die gleichmäßig dem nachfolgenden Feinzerkleinerungsvorgang, der beispielsweise im Wolf erfolgt, zugeführt werden.

Die genannten wasserhaltigen Polymerisatgele werden durch radikalische Polymerisation wasserlöslicher, einfach und gegebenenfalls mehrfach olefinisch ungesättigter Monomerer gebildet. Beispiele hierfür sind α, β ungesättigte Mono- und Dicarbonsäuren, wie Acrylsäure, Methacrylsäure, Maleinsäure, Itaconsäure, und/oder deren Natrium-, Kalium- und/oder Amoniumsalze, Acrylsäure- und Methacrylsäureester von Aminoalkylalkoholen in quartärer Salzform oder als Hydrosalze, wie Dimethylaminoethyl(meth)acrylat-Hydrochlorid, Dimethylaminoethyl(meth)acrylat-Hydrosulfat, Dimethylaminoethyl(meth)acrylat-Methochlorid, Dimethylaminoethyl(meth)acrylat-Methosulfat, Acrylamid und Methacrylamid und deren N-Mono- und N,N-Dialkylderivate, wie (Meth)acrylamidopropyltrimethylamoniumchlorid, (Meth)acrylamidopropyltrimethylamoniunnnethylsulfat sowie N-Methylol(meth)acrylamid und dessen partiell oder ganz mit C₁ bis C₄-Alkoholen gebildete Ether, (Meth)acrylamidoalkylsulfonsäuren und/oder deren Salze, wie 2-Acrylamido-2-methylpropansulfonsäure, Hydroxialkyl(meth)acrylate sowie Vinylsulfonsäure, (Meth)allylsulfonsäure, (Meth)allylalkoholsulfat, Vinylphosphonsäure und/oder deren Salze, N-Vinylamide, wie beispielsweise N-Vinylformamid, N-Vinylacetamid, N-Vinyl-N-methylacetamid und N-Vinyl-N-methylfomamid, Diallyldimethylannnoniumchlorid, N-Vinylpyrrolidon, N-Vinylimidazol, N-Vinylimidazolin, 2-Methyl-1-vinylimidazolin, 2-Sulfoethyl(meth)acrylat, Styrolphosphonsäure und Styrolsulfonsäure und/oder deren Salze.

Beispiele für mehrfach olefinisch ungesättigte Verbindungen sind Acrylate und Methacrylate von Polyolen, wie Butandioldiacrylat, Hexandioldi (meth)acrylat, Polyglykoldiacrylat, Trimethylolpropantriacrylat, ethoxiliertes Trimethylolpropantriacrvlat, Allylacrylat, Diallylacrylamid, Triallylamin, Diallylether, Methylenbisacrylamid und funktionelle Verbindungen wie Polyglycidether, Epichlorhydrin.

Die genannten Monomere können in beliebigem Verhältnis miteinander copolymerisiert werden.

Wasserhaltige Gele von Pfropfpolymerisaten werden durch Polymerisation mindestens eines der genannten Monomere mit Substraten, wie Stärke, Cellulose oder deren Derivate, wie beispielsweise Carboxymethyl- oder Hydroxyethylcellulose, Polyvinylalkohol oder teilweise zu Polyvinylalkohol verseiftes Polyvinylacetat gewonnen.

Beispiele solcher Polymerisatgele sind wasserhaltige, zähelastische hochmolekulare, ionogen oder nichtionogene oder amphotere Mono- oder Copolymerisate, die als Flockungs-, Retentions- und/oder Verdickungshilfsmittel verwendt werden, brüchigspröde, vernetzte Mono- und Copolymerisate, die als Superabsorber zur Herstellung von Hygiene-, Sanitär- und Inkontinenzartikel verwendet oder beispielsweise zur Bodenverbesserung im Bereich der Pflanzenzucht und der landwirtschaftlichen Produktion eingesetzt werden. Bei spröden Polymerisatgelen, wie beispielsweise den Stokosorb®-Produkten, wird durch das erfindungsgemäße Verfahren der bei der Anwendung nachteilige feinkörnige Pulveranteil zugunsten des Kornbereichs von 200 - 1000 µm um ca. 20 Gew.% reduziert.

### Bezugszeichenliste

- 10: Polymerisatgel/Gelstrang
- 11: Schneidwalze
- 12: Gegenwalze
- 13: Walzenspalt
- 14: Längsschneidelement
- 15: Querschneidelement
- 16: Gelstücke
- 17: Schneidkante
- 18: Schneidkante
- 19: Querschneidwalze
- 20: Längsschneidwalze

## Patentansprüche

1. Vorrichtung zur Grobzerkleinerung eines wasserhaltigen Polymerisatgeles mit zwei achsparallel zueinander angeordneten, in unterschiedlichen Richtungen rotierenden Walzen (11, 12), zwischen denen ein Walzenspalt (13) zum Durchtritt des Polymerisatgeles (10) ausgebildet ist, **dadurch gekennzeichnet,** daß eine Walze als Schneidwalze (11) ausgebildet ist, an der mindestens ein sich in axialer Richtung erstreckendes, eine Schneidkante (17) aufweisendes Querschneidelement (15) und ein sich in radialer Richtung erstreckendes, eine umlaufende Schneidkante (18) aufweisendes Längschneidelement (14) angebracht ist, und daß die andere Walze als Gegenwalze (12) ausgebildet ist.

2. Vorrichtung zur Grobzerkleinerung eines wasserhaltigen Polymerisatgeles mit zwei achsparallel zueinander angeordneten, in unterschiedlichen Richtungen rotierenden Walzen (12,19), zwischen denen ein Walzenspalt (13) zum Durchtritt des Polymerisatgeles (10) ausgebildet ist, **dadurch gekennzeichnet,** daß eine Walze als Querschneidwalze (19) ausgebildet ist, an der mindestens ein sich in axialer Richtung erstreckendes, eine Schneidkante (17) aufweisendes Querschneidelement (15) angebracht ist, daß die andere Walze als Gegenwalze (12) ausgebildet ist, und daß der Querschneidwalze (19) eine Längsschneidwalze (20) mit mindestens einem sich in radialer Richtung erstreckenden, eine umlaufende Schneidkante (18) aufweisenden Längschneidelement (14) vorgelagert ist.

3. Vorrichtung nach wenigstens einem der vorhergehenden Ansprüche, dadurch gekennzeichnet, daß die Breite des Walzenspaltes (13) in etwa der Höhe der Quer- (15) und/oder Längsschneidelemente (14) entspricht.

4. Vorrichtung nach wenigstens einem der vorhergehenden Ansprüche, dadurch gekennzeichnet, daß die Breite des Walzenspaltes (13) variierbar ist.

5. Vorrichtung nach wenigstens einem der vorhergehenden Ansprüche, dadurch gekennzeichnet, daß das Längsschneidelement (14) derart ausgebildet ist, daß seine Umfangsgeschwindigkeit größer als die Fördergeschwindigkeit des Polymerisatgeles (10) ist.

6. Vorrichtung nach wenigstens einem der vorhergehenden Ansprüche, dadurch gekennzeichnet, daß die Querschneidelemente (15) aus einem einseitig mit einem Feinschliff versehene Flacheisen gebildet sind.

7. Vorrichtung nach wenigstens einem der vorhergehenden Ansprüche, dadurch gekennzeichnet, daß die Querschneidelemente (15) im Querschnitt eben oder sichelförmig ausgebildet sind.

8. Vorrichtung nach wenigstens einem der vorhergehenden Ansprüche, dadurch gekennzeichnet, daß die Querschneidelemente (15) parallel oder spindelförmig zur Längsachse der Schneid- (11) bzw. Querschneidwalze (19) angeordnet sind.

9. Vorrichtung nach wenigstens einem der vorhergehenden Ansprüche, dadurch gekennzeichnet, daß die Gegenwalze (12) das Polymerisatgel (10) transportiert und während des Schneidvorganges gegen die Quer- (15) und/oder Längsschneidelemente (14) preßt.

10. Vorrichtung nach wenigstens einem der vorhergehenden Ansprüche, dadurch gekennzeichnet, daß die Gegenwalze (12) mit einem Kunststoff, insbesondere mit Polyethylen, Polypropylen, Teflon oder dergleichen beschichtet ist.

11. Vorrichtung nach wenigstens einem der vorhergehenden Ansprüche, dadurch gekennzeichnet, daß die Gegenwalze (12) eine mit Vertiefungen versehene Oberfläche aufweist, wobei die Vertiefungen die Schneidkanten (17, 18) der Quer- (15) und/oder Längsschneidelemente (14) aufnehmen können.

12. Verfahren zur Grobzerkleinerung wasserhaltiger Polymerisatgele dadurch gekennzeichnet, daß das wasserhaltige Polymerisatgele (10) direkt nach der Polymerisation ohne Hilfsmittel oder zusätzliche verfahrenstechnische Behandlungsmaßnahmen mit einer Vorrichtung gemäß wenigstens einem der vorhergehenden Ansprüche zu Polymerisatgelteilen vorgegebener Größe grob zerteilt wird.

13. Verfahren nach Anspruch 12, dadurch gekennzeichnet, daß die Grobzerteilung in einem kontinuierlichen Materialfläß erfolgt.

## Claims

1. A device for coarse crushing of a hydrous polymer gel, using two rolls (11, 12) in mutual axially parallel arrangement which rotate in different directions, between them a roll nip (13) being provided, allowing the polymer gel (10) to pass through, characterized in that one roll is designed as a cutting roll (11) having attached thereto at least one transverse cutting element (15) extending in axial direction, which has a cutting edge (17), and one longitudinal cutting element (14) extending in radial direction, which has a circumferential cutting edge (18), and that the other roll is designed as a counterroll (12) .

2. A device for coarse crushing of a hydrous polymer gel, using two rolls (12, 19) in mutual axially parallel arrangement which rotate in different directions, between them a roll nip (13) being provided, allowing the polymer gel (10) to pass through, characterized in that one roll is designed as a transverse cutting roll (19) having attached thereto at least one transverse cutting element (15) extending in axial direction, which has a cutting edge (17), that the other roll is designed as a counterroll (12), and that the transverse cutting roll (19) is preceded by a longitudinal cutting roll (20) having at least one longitudinal cutting element (14) extending in radial direction, which has a circumferential cutting edge (18).

3. The device according to at least one of the preceding claims, characterized in that the width of the roll nip (13) corresponds approximately to the height of the transverse cutting element (15) and/or the longitudinal cutting element (14).

4. The device according to at least one of the preceding claims, characterized in that the width of the roll nip (13) is variable.

5. The device according to at least one of the preceding claims, characterized in that the longitudinal cutting element (14) is of such a design that its circumferential speed is higher than the conveying rate of the polymer gel (10).

6. The device according to at least one of the preceding claims, characterized in that the transverse cutting elements (15) are formed of a flat steel bar provided with a fine-ground finish on one side.

7. The device according to at least one of the preceding claims, characterized in that the cross-section of the transverse cutting elements (15) is of a planar or crescent-shaped design.

8. The device according to at least one of the preceding claims, characterized in that the transverse cutting elements (15) are arranged in parallel or spindle-shaped to the longitudinal axis of the cutting roll (11) or the transverse cutting roll (19).

9. The device according to at least one of the preceding claims, characterized in that the counterroll (12) conveys the polymer gel (10), pressing it against the transverse cutting element (15) and/or the longitudinal cutting element (14) during the cutting process.

10. The device according to at least one of the preceding claims, characterized in that the counterroll (12) is coated with a plastic, particularly polyethylene, polypropylene, Teflon or the like.

11. The device according to at least one of the preceding claims, characterized in that the counterroll (12) has a surface provided with recesses, said recesses allowing to accommodate the cutting edges (17, 18) of the transverse cutting element (15) and/or the longitudinal cutting element (14).

12. A process for coarse crushing of hydrous polymer gels, characterized in that the hydrous polymer gel, immediately following polymerization, is coarsely reduced to polymer gel fragments of a predetermined size without using implements or additional technical measures of treatment, using a device according to at least one of the preceding claims.

13. The process according to claim 12, characterized in that the coarse reduction is effected in a continuous material flow.

## Revendications

1. Dispositif de fragmentation grossière de gels aqueux polymères comprenant deux rouleaux (11, 12) disposés avec leurs axes en parallèle, tournant dans des sens différents, entre lesquels un écart (13) est formé pour le passage du gel polymère (10), caractérisé en ce qu'un rouleau est conformé comme un rouleau de découpe (11) sur lequel sont placés au moins un élément de coupe transversale (15) s étendant dans le sens axial, présentant une arête coupante (17), et un élément de coupe longitudinale (14) s'étendant dans le sens radial, présentant un arête tranchante (18) périphérique, et en ce que l'autre rouleau est conformé comme un contre-rouleau (12).

2. Dispositif de fragmentation grossière de gels aqueux polymères comprenant deux rouleaux (12, 19) disposés avec leurs axes en parallèle, tournant dans des sens différents, entre lesquels un écart (13) est formé pour le passage du gel polymère (10), caractérisé en ce qu'un rouleau est conformé comme un rouleau de découpe transversale (19) sur lequel est placé au moins un élément de coupe transversale (15) s'étendant dans le sens axial, présentant une arête tranchante (17), en ce que l'autre rouleau est conformé comme un contre-rouleau (12) et en ce que le rouleau de découpe transversale (19) est précédé d'un rouleau de découpe longitudinale (20) ayant au moins un élément de coupe longitudinale (14) s'étendant dans le sens radial, présentant une arête tranchante périphérique (18).

3. Dispositif selon au moins une des revendications précédentes, caractérisé en ce que la largeur de l'écart (13) entre les rouleaux correspond sensiblement à la hauteur des éléments de coupe transversale (15) et/ou de coupe longitudinale (14).

4. Dispositif selon au moins une des revendications précédentes, caractérisé en ce que la largeur de l'écart (13) entre les rouleaux peut varier.

5. Dispositif selon au moins une des revendications précédentes, caractérisé en ce que l'élément de coupe longitudinale (14) est conformé de telle manière que sa vitesse périphérique est plus grande que la vitesse de progression du gel polymère (10).

6. Dispositif selon au moins une des revendications précédentes, caractérisé en ce que les éléments de coupe transversale (15) sont des aciers plats pourvus sur un côté d'un polissage de finition.

7. Dispositif selon au moins une des revendications précédentes, caractérisé en ce que les éléments de coupe transversale (15) ont une section transversale plane ou en forme de croissant.

8. Dispositif selon au moins une des revendications précédentes, caractérisé en ce que les éléments de coupe transversale (15) sont disposés en parallèle ou en forme de fuseau par rapport à l'axe longitudinal du rouleau de découpe (11) ou encore du rouleau de découpe transversale (19).

9. Dispositif selon au moins une des revendications précédentes, caractérisé en ce que le contre-rouleau (12) transporte le gel polymère (10) et presse contre les éléments de coupe transversale (15) et / ou de coupe longitudinale (14) pendant le processus de coupe,

10. Dispositif selon au moins une des revendications précédentes, caractérisé en ce que le contre-rouleau (12) est revêtu d'une matière synthétique, en particulier de polyéthylène, de polypropylène, de téflon ou d'une matière similaire.

11. Dispositif selon au moins une des revendications précédentes, caractérisé en ce que le contre-rouleau (12) présente une surface pourvue d'entailles, les entailles pouvant recevoir les arêtes tranchantes (17, 18) de l'élément de coupe transversale (15) et / ou l'élément de coupe longitudinale (14).

12. Procédé de fragmentation grossière de gels aqueux polymères, caractérisé en ce que le gel aqueux polymère (10) est divisé immédiatement après la polymérisation sans agent auxiliaire ou autres mesures de traitement technique avec un dispositif conforme au moins à une des revendications précédentes en fragments de gel polymère d'une grandeur donnée.

13. Procédé selon la revendication 12, caractérisé en ce que la division grossière a lieu pendant que le matériau s'écoule en continu.
